# EUROPÄISCHE PATENTSCHRIFT

(11) **EP 3 151 337 B1**
(45) Veröffentlichungstag und Bekanntmachung des Hinweises auf die Patenterteilung: **27.05.2020**
(21) Anmeldenummer: 16191696.0
(22) Anmeldetag: 30.09.2016
(51) Int. Cl.: H01R 4/22, H01R 43/042, H02G 15/04, H02G 1/12

(54) **FLACHBANDKABEL UND VERFAHREN ZUR ISOLIERUNG VON FLACHBANDKABELN**
RIBBON CABLE AND METHOD FOR ISOLATION OF RIBBON CABLES
CÂBLE PLAT ET PROCÉDÉ D'ISOLATION DE CÂBLES PLATS

(30) Priorität: 01.10.2015 DE 102015116723
(43) Veröffentlichungstag der Anmeldung: 05.04.2017
(73) Patentinhaber: Wieland Electric GmbH, 96052 Bamberg (DE)
(72) Erfinder: Hohner, Manfred, 96191 Viereth-Trunstadt (DE); Schöpplein, Helmut, 96188 Stettfeld (DE); Lang, Oliver, 96049 Bamberg (DE)
(74) Vertreter: Tergau & Walkenhorst Patentanwälte PartGmbB

(56) Entgegenhaltungen:
- DE-A1-102007 050 239
- DE-B- 1 212 178
- DE-U1-202014 002 232
- US-A1- 2002 025 716

## Beschreibung

Die Erfindung betrifft ein Flachbandkabel mit mehreren nebeneinander angeordneten und parallel zueinander verlaufenden Leitern. Derartige Flachbandkabel werden in der Installationstechnik in Gebäuden und Fabriken eingesetzt. Das Flachbandkabel ist dabei in der Regel so verlegt, dass es überall dort verläuft,
wo elektrisches Potential benötigt wird, beispielsweise zur Einspeisung von elektrischer Energie oder von Daten. Das Flachbandkabel kann also eine Energieleitung, eine Datenleitung oder auch eine kombinierte Energie- und Datenleitung sein. Das Potential wird vom Flachbandkabel mit Hilfe sogenannter Abgriffe entnommen. Die Abgriffe werden einfach auf das Flachbandkabel aufgesetzt und mit einer Durchdringungstechnik wird der Isoliermantel des Flachbandes von einem Anschlusskontakt durchdrungen, so dass der Anschlusskontakt mit dem elektrischen Leiter in Kontakt tritt.

Die Erfindung betrifft insbesondere das Ende eines derartigen Flachbandkabels. Nach dem Stand der Technik wird das Flachbandkabel am Ende einfach abgeschnitten. Dabei sind die Litzen der einzelnen Leiter, insbesondere die Kupferlitzen elektrischer Leiter nach hinten hin offen. Zur Vermeidung von Kurzschlüssen oder elektrischen Stromschlägen werden die Enden der Flachbandkabel bislang mit Silikon versiegelt. Diese Versiegelung muss jedoch präzise aufgebracht werden, um technische Wirksamkeit zu entfalten. Weiterhin ist Silikon als Werkstoff häufig wegen seiner chemischen Eigenschaften unerwünscht. Alternativ ist es auch möglich, die Leitungsenden mit Hilfe von Schraubklemmen zu isolieren.
Dies ist jedoch sehr montageaufwendig. Zudem besteht das Risiko, dass die Leiterenden beim Anbringen der Schraubklemme beschädigt werden.

Aus der DE 20 2014 002232 U1 ist in diesem Zusammenhang ein Flachbandkabel mit mehreren nebeneinander angeordneten und parallel zueinander verlaufenden Leitern bekannt. Zur Isolierung des Kabelendes ist dort vorgeschlagen, auf das Kabelende eine die Leiterenden überdeckende Schutzkappe aufzusetzen. Diese vorzugsweise klemmfixierte Schutzkappe dient der Isolierung der Leiterenden. Es ist ferner vorgeschlagen, in die Schutzkappe Isoliermittel bzw. lsoliermaterial einzubringen, was den Montageaufwand erhöht. Ferner muss sorgsam kontrolliert werden, dass sich das Isoliermittel in der Schutzkappe homogen verteilt. Eine ähnliche Konstruktion ist aus der US 2002/025716 A1 bekannt. Weiterhin betrifft die Erfindung ein Verfahren zum Isolieren der Leiter eines erfindungsmäßigen Flachbandkabels am Kabelende. Aufgrund der hohen Sicherheitsrelevanz ist nicht nur die Ausgestaltung des Flachbandkabels in seinem Montageendzustand sondern auch ein prozesssicherer und zugleich kostengünstiger Herstellungsweg von entscheidender Bedeutung. Insbesondere muss ausgeschlossen sein, dass durch Fehler bei der Herstellung oder der Montage die Sicherheitseigenschaften des Flachbandkabels beeinträchtigt oder außer Kraft gesetzt werden.

Ausgehend hiervon liegt der Erfindung die Aufgabe zu Grunde, ein Flachbandkabel so zu gestalten, dass die Isolierung an den Kabelenden einfach anzubringen ist und eine wirksame Isolierung zugleich gewährleistet ist, sowie ein geeignetes Verfahren hierfür anzugeben.

Diese Aufgabe ist durch das Flachbandkabel nach Anspruch 1 und durch das Verfahren nach Anspruch 8 bzw. 10 in erfinderischer Weise gelöst.

Die Erfindung beruht auf dem Grundgedanken, die jeweils benachbarten Leiter eines Flachbandkabels jeweils unterschiedlich lang abzulängen. Auf diese Weise springt das Leiterende eines Leiters gegenüber dem Ende seines oder seiner benachbarten Leiter um einen gewissen Betrag vor oder zurück. Dadurch sind die Luft- und Kriechstrecken zwischen den Enden der Leiter signifikant vergrößert. Diese Maßnahme erhöht die Spannungsfestigkeit der benachbarten Leiter. Als zusätzliche Maßnahme wird auf das Kabelende noch eine sämtliche Leiterenden überdeckende Schutzkappe aufgesetzt. Die Schutzkappe und die voneinander abweichenden Längen der Leiterenden bewerkstelligen die erwünschte gute lsolierung der Leiterenden gegeneinander.

Besonders vorteilhaft ist ein mäanderförmiger Verlauf der Leiterenden am Kabelende. Dabei springt jeder zweite Leiter gegenüber seinen benachbarten Leitern um einen gewissen Betrag zurück. Der Längenunterschied zweier benachbarter Leiter ist dabei von der Bemessungsspannung abhängig und entspricht einem der jeweiligen Bemessungsspannung äquivalenten Längenmaß.

Alternativ kann das Kabelende auch einen treppenförmigen Verlauf aufweisen. Beim treppenförmigen Verlauf wird der jeweilige Einzelleiter gegenüber seinem Nachbarleiter jeweils am Ende gekürzt. Auch durch diese Maßnahme entstehen vergrößerte Luft- und Kriechstrecken. Allerdings kann der Längenunterschied zwischen dem längsten und dem kürzesten Leiter eine große Schutzkappe erforderlich machen.

Schließlich kann das Kabelende in weiterer Ausgestaltung auch einen schrägen Verlauf aufweisen. Ein solcher schräger Verlauf ist platzsparend. Es sind auch Mischformen der vorerwähnten Gestaltungen der Kabelenden denkbar.

Auch sind Mischformen der drei vorerwähnten Ausgestaltungen des Kabelendes denkbar.

In weiterer vorteilhafter Ausgestaltung ist die Innenkontur der Schutzkappe so profiliert, dass sie der Außenkontur des Kabelendes entspricht. Die Innenkontur der Schutzkappe schließt somit bündig mit dem Kabelende des Flachbandkabels ab. Mit anderen Worten liegt das Ende eines jeden Leiters an dem ihm jeweils zugeordneten Abschnitt der Innenkontur der Schutzkappe bündig an.

In weiterer vorteilhafter Ausgestaltung ist die Schutzkappe aus Sicherheitsgründen unlösbar am Kabelende fixiert. Um sich zu den Leitern am Kabelende Zugang zu verschaffen muss dann der gesamte von der Schutzkappe abgedeckte Bereich des Kabelendes vom Flachbandkabel getrennt werden, um die jeweiligen Leiter wieder freizulegen.

Zur Herstellung des vorstehend beschriebenen, erfindungsmäßigen Flachbandkabels wird folgendes erstes Verfahren vorgeschlagen:
In einem ersten Verfahrensschritt werden die Leiterenden gradlinig abgelängt. In einem zweiten Verfahrensschritt wird das Leiterende zumindest jedes zweiten Leiters gegenüber seinen benachbarten Leitern noch einmal gekürzt und in einem dritten Verfahrensschritt wird die Schutzkappe am Kabelende vorzugsweise unverlierbar adaptiert.

In vorteilhafter Ausgestaltung des Verfahrens werden die Leiterenden jedes Leiters, die gegenüber den Leiterenden der benachbarten Leiter jeweils gekürzt sind zunächst von einem guillotinenartigen Schneidzahn durchtrennt. Das zusätzlich abgetrennte Leiterstück wird sodann mit einem Stempel aus dem Flachbandkabelverbund ausgestanzt.

Zur Herstellung des erfindungsmäßigen Flachbandkabels wird ferner folgendes zweites Verfahren vorgeschlagen:
In einem gemeinsamen Verfahrensschritt werden die Leiterenden sowohl geradlinig abgelängt als auch das Leiterende zumindest jedes zweiten Leiters gegenüber seinem benachbarten Leiter noch einmal gekürzt. In einem weiteren zweiten und zugleich letzten Verfahrensschritt wird wiederum die Schutzkappe am Kabelende vorzugsweise unverlierbar adaptiert.

Anhand des in den Zeichnungsfiguren dargestellten Ausführungsbeispiels wird die Erfindung mit weiteren Einzelheiten beschrieben. Es zeigen:
- Fig. 1a: Das Ende eines erfindungsmäßigen Flachbandkabels mit fünf mäanderförmig angeordneten Leitern im bereits abgelängten Zustand,
- Fig. 1b: das Ende eines erfindungsmäßigen Flachbandkabels mit drei mäanderförmig angeordneten Leitern und daneben zwei treppenförmig angeordneten Leitern im bereits abgelängten Zustand,
- Fig. 1c: das Ende eines erfindungsmäßigen Flachbandkabels mit drei mäanderförmig angeordneten Leitern und daneben zwei schräg angeordneten Leitern im bereits abgelängten Zustand,
- Fig. 2: ein analog der Darstellung in Fig. 1 bereits abgelängtes Flachbandkabel vor dem Aufsetzen der Schutzkappe,
- Fig. 3: das Flachbandkabel aus Fig. 2 mit aufgesetzter, jedoch noch unverschlossener Schutzkappe,
- Fig. 4: das Flachbandkabel aus Fig. 2 und Fig. 3 mit verschlossener Schutzkappe,
- Fig. 5: das Ausführungsbeispiel einer demontierbaren Schutzkappe,
- Fig. 6: ein Werkzeug zur Durchführung eines erfindungsmäßigen Verfahrens,
- Fig. 7: den ersten Verfahrensschritt des Ablängens des Flachbandkabels,
- Fig. 8: den zweiten Schritt des Verkürzens der abzutrennenden Leiterenden,
- Fig. 9: den Verfahrensschritt des Austanzens der in Fig. 8 abgeschnittenen verkürzten Leiterenden,
- Fig. 10: ein gegenüber dem Ausführungsbeispiel gemäß Fig. 6 - Fig. 9 modifiziertes Werkzeug zur Durchführung eines erfindungsmäßigen Verfahrens sowie
- Fig. 11: eine Ansicht auf die Unterseite des in Fig. 10 dargestellten Werkzeugs gemäß Pfeil XI in Fig. 10.

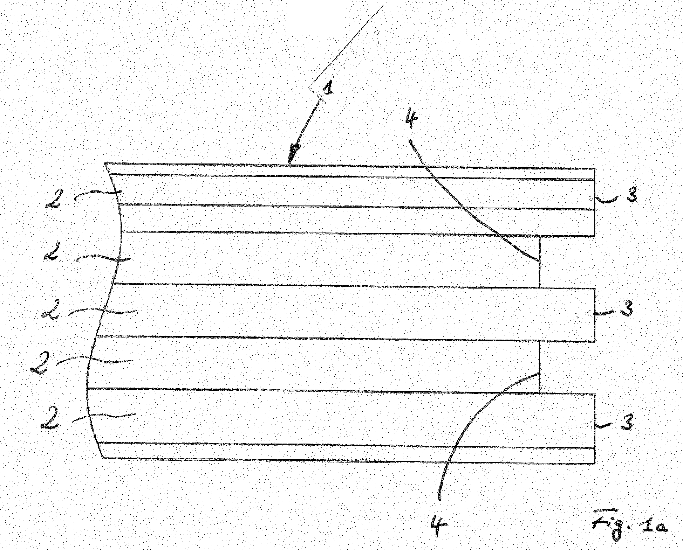

Das Ende des in Fig. 1a gezeigten Flachbandkabels 1 weist insgesamt fünf parallel nebeneinander verlaufende Leiter 2 auf. Betrachtet man die in Fig. 1a dargestellten Leiterenden der Leiter 2, fällt auf, dass die Leiterenden 3 der beiden äußeren und des mittleren Leiters 2 eine gemeinsame Länge aufweisen, während die jeweils zwischen den äußeren Leitern 2 und dem mittleren Leiter 2 angeordneten Leiter 2 jeweils ein verkürztes Leiterende 4 aufweisen.

Fig. 1a zeigt also ein Flachbandkabel 1 mit einem mäanderförmigen Verlauf der Leiterenden 3, 4. Der Abstand zwischen den Leiterenden 3 und den verkürzten Leiterenden 4 ist dabei so groß, dass die Luft- und Kriechstrecken ebenfalls gegenüber Leiterenden 3 gleicher Länge verlängert sind.

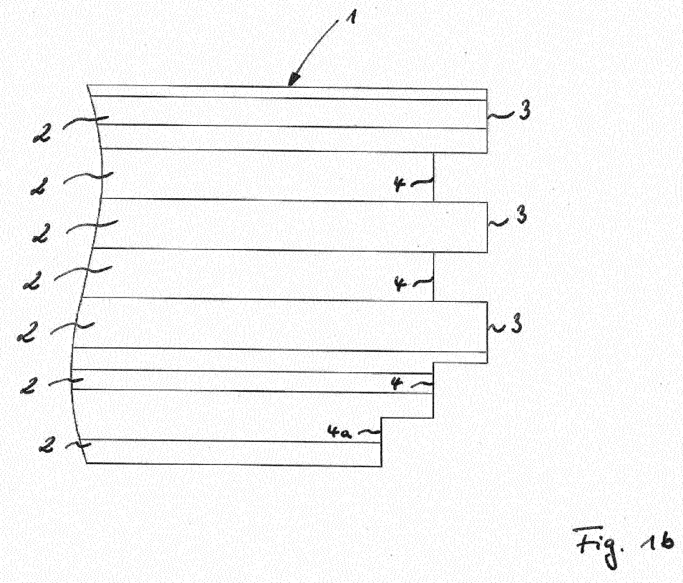

Das Ende des in Fig. 1b gezeigten Flachbandkabels 1 weist insgesamt sieben parallel nebeneinander verlaufende Leiter 2 auf. Betrachtet man die in Fig. 1b dargestellten Leiterenden der Leiter 2, fällt auf, dass die fünf oberen Leiter 2 analog Fig. 1a abwechselnd längere Leiterenden 3 und verkürzte Leiterenden 4 aufweisen. Auch der zweite Leiter von unten hat ein verkürztes Leiterende 4 während der unterste Leiter gegenüber dem vorerwähnten darüber liegenden Leiter ein weiter verkürztes zurückspringendes Leiterende 4a aufweist.

Fig. 1b zeigt also ein Flachbandkabel 1 mit einem zunächst mäanderförmigen und anschließend treppenförmigen Verlauf der Leiterenden 3, 4. Der Abstand zwischen den Leiterenden 3 und den verkürzten Leiterenden 4 sowie dem zurückspringenden Leiterende 4a ist wiederum so groß, dass die Luft- und Kriechstrecken ebenfalls gegenüber Leiterenden 3,4,4a der benachbarten Leiter 2 verlängert sind.

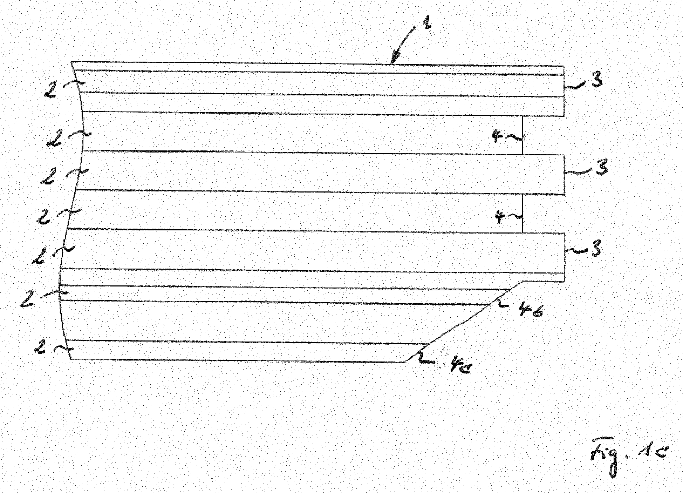

Das Ende des in Fig. 1c gezeigten Flachbandkabels 1 weist wiederum sieben parallel nebeneinander verlaufende Leiter 2 auf. Betrachtet man die in Fig. 1c dargestellten Leiterenden der Leiter 2, fällt auf, dass die fünf oberen Leiter 2 analog Fig. 1a abwechselnd längere Leiterenden 3 und verkürzte Leiterenden 4 aufweisen. Auch der zweite Leiter 2 von unten hat ein verkürztes und schräg geschnittenes Leiterende 4b während der unterste Leiter 2 gegenüber dem vorerwähnten darüber liegenden Leiter 2 ein weiter verkürztes schräg geschnittenes Leiterende 4c aufweist, wobei die Schrägung am Leiterende 4b nahtlos in die Schrägung am Leiterende 4c übergeht.

Fig. 1c zeigt also ein Flachbandkabel 1 mit einem zunächst mäanderförmigen und anschließend treppenförmigen Verlauf der Leiterenden 3, 4. Der Abstand zwischen den Leiterenden 3 und den verkürzten Leiterenden 4 sowie den abgeschrägten Leiterenden 4b und 4c ist wiederum so groß, dass die Luft- und Kriechstrecken ebenfalls gegenüber Leiterenden 3,4,4b,4c der jeweils benachbarten Leiter 2 verlängert sind.

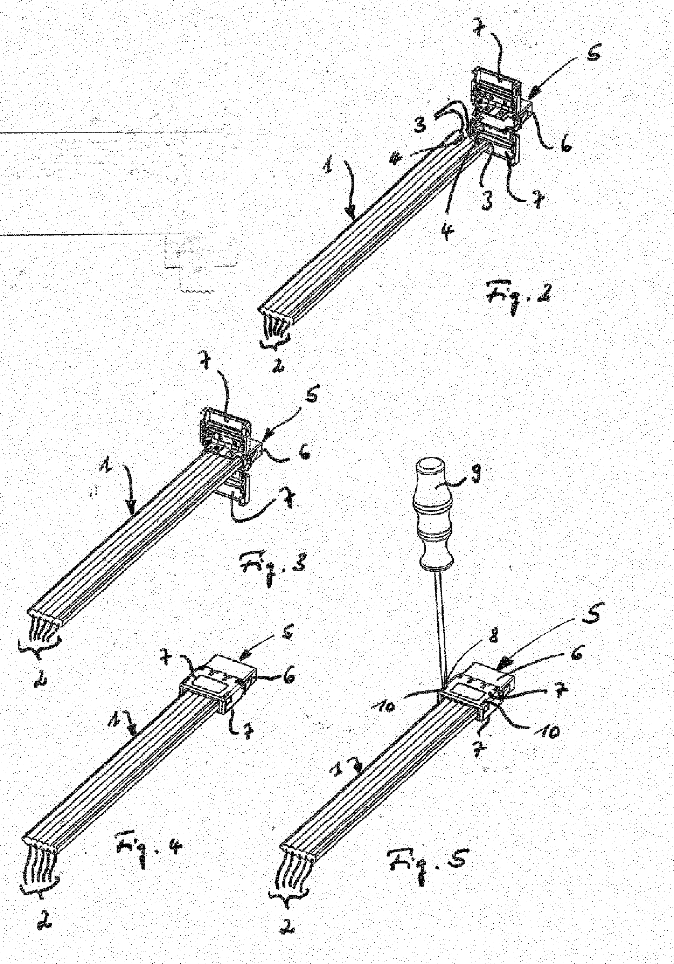

Zur endgültigen Isolierung der Leiterenden 3, 4 ist die in Fig. 2 erkennbare Schutzkappe 5 vorgesehen. Die Schutzkappe 5 weist einen über die Leiterenden 3, 4 steckbaren Kappenbereich 6 und zwei sich an den Kappenbereich 6 anschließende, schwenkbar gelagerte Verschlusslaschen 7 auf. Weiterhin ist in der Schutzkappe 5 eine Innenkontur angeordnet, welche einen mäanderförmigen, komplementär zu den Leiterenden 3, 4 ausgestalteten Verlauf aufweist. Aus der Darstellung der Fig. 3 ist erkennbar, dass die Schutzkappe 5 mit dem Kappenbereich 6 so auf das Flachbandkabel 1 aufgeschoben wird, dass die Leiterenden 3, 4 im Kappenbereich 6 einliegen und mit ihren Stirnseiten an die vorbeschriebene Innenkontur im Kappenbereich 6 stoßen. Zum Verschließen werden die Verschlusslaschen 7 sodann gegeneinander verschwenkt und mit Hilfe von Rastelementen aneinander verrastet, wie dies der Fig. 4 zu entnehmen ist. Eine bevorzugte Ausführungsform der Erfindung weist eine unverlierbar am Flachbandkabel 1 fixierte Schutzkappe 5 auf. Fig. 5 zeigt hingegen eine weitere Ausführungsform, bei welcher mit der Schrauberklinge 8 eines Schraubendrehers 9 in eine entsprechende Schrauberklingentasche 10 an der Schutzkappe 5 eingegriffen werden kann, um einen dann die Verschlusslaschen 7 miteinander verriegeltenden Schnappverschluss wieder lösen zu können. Grundsätzlich soll im Zusammenhang mit der Erfindung aber darauf geachtet werden, dass die Schutzkappe 5 nicht ungewollt, insbesondere ohne zu Hilfenahme eines Werkzeugs vom Flachbandkabel 1 wieder gelöst werden kann.

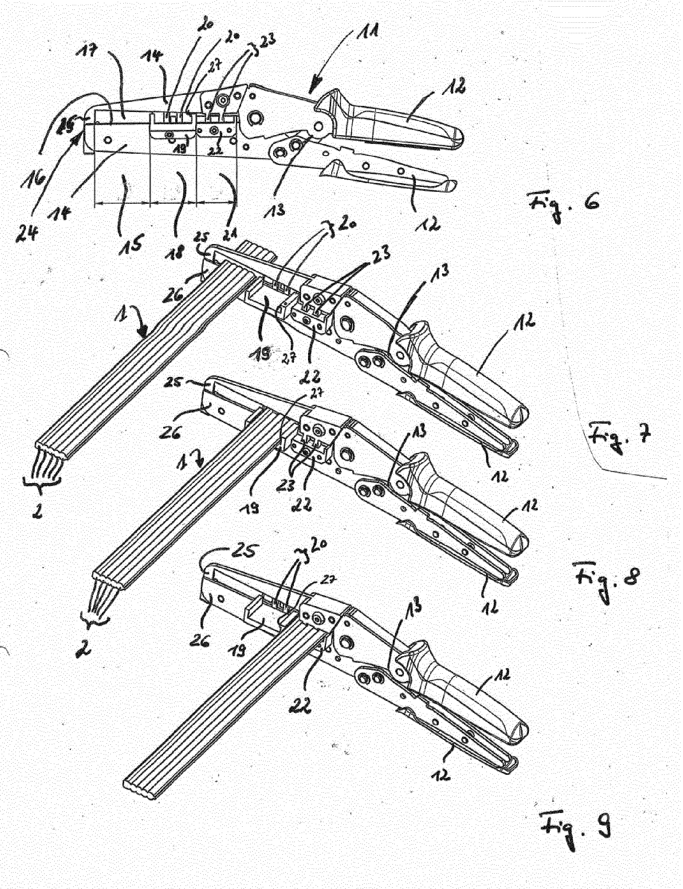

Fig. 6 zeigt schließlich eine erste Ausführungsform einer als Montagewerkzeug dienenden Zange 11. Die Zange 11 weist an ihrem einen Ende zwei Handgriffe 12 auf. Die Handgriffe 12 sind über ein Hebelgetriebe 13 schwenkbar miteinander verbunden. An den den Handgriffen 12 abgewandten Enden weist die Zange 11 zwei Zangenbacken 14 auf. Die Zangenbacken 14 sind in drei unterschiedliche Schnittbereiche aufgeteilt. Ein erster, im Ausführungsbeispiel links angeordneter Schnittbereich 15 weist an der unteren Zangenbacke 14 eine Auflagefläche 16 und an der oberen Zangenbacke 14 eine guillotinenartige Schneidklinge 17 auf. Wie aus Fig. 7 ersichtlich, wird das Ende des Flachbandkabels 1 im ersten Schnittbereich 15 durch die Zangenbacken 14 hindurch geschoben. Mit der Schneidklinge 17 werden die Leiterenden 3, 4 auf dieselbe Länge geschnitten.

An den ersten Schnittbereich 15 schließt sich als mittlerer Bereich der Zange 11 der Feinschnittbereich 18 an. Der Feinschnittbereich 18 weist an der unteren Zangenbacke 14 eine U-förmige Aufnahmekammer 19 auf. In die U-förmige Aufnahmekammer 19 wird das Flachbandkabel 1 wie in Fig. 8 dargestellt eingelegt. Die Kodiernase 27 stellt dabei sicher, dass das Flachbandkabel 1 lagerichtig in der U-förmigen Aufnahmekammer 19 einliegt. Die an der oberen Zangenbacke 14 angebrachten Schneidzähne 20 trennen die beiden zwischen den jeweils äußeren und dem mittleren Leiter 2 liegenden Leiter ab zur Schaffung der Leiter 2 mit den verkürzten Leiterenden 4. An den Feinschnittbereich 18 schließt sich rechts ein Ausstanzbereich 21 an. Im Ausstanzbereich 21 ist an der unteren Zangenbacke 14 ein Auflageklotz 22 vorgesehen. Auf den Auflageklotz 22 werden die Leiterenden 3, 4 aufgelegt und die abgeschnittenen Bereiche der verkürzten Leiterenden 4 werden mit Hilfe der an der oberen Zangenbacke 14 angebrachten Stanzstempel 23 aus dem Flachbandkabel 1 ausgestanzt und so vom Flachbandkabel 1 entfernt. Dieser Vorgang ist in Fig. 9 dargestellt.

An dem dem Hebelgetriebe 13 in Fig. 6 abgewandten Zangenmaul ist schließlich eine Bahnführung 24 ausgestaltet. Die Bahnführung 24 besteht aus einem Führungsschwert 25 an der oberen Zangenbacke 14 und zwei Führungswangen 26 an der unteren Zangenbacke 14. Zur Vollendung der Bahnführung 24 ist das Führungsschwert 25 zwischen den beiden Führungswangen 26 geführt. Das Führungsschwert 25 liegt also zwischen den Führungswangen 26 von diesen geführt ein.

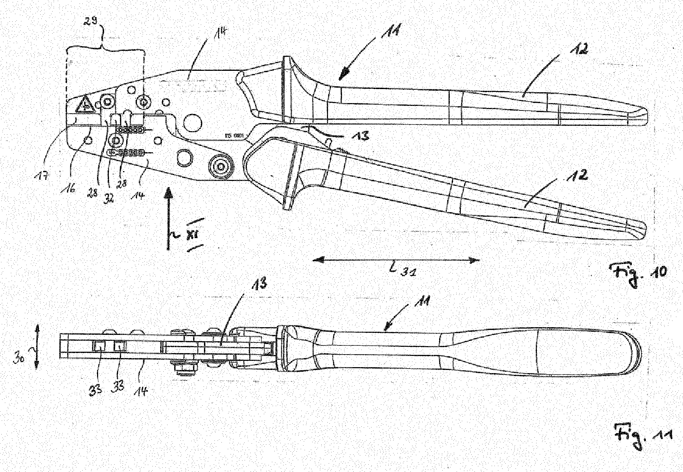

Fig. 10 zeigt schließlich eine zweite Ausführungsform einer wiederum als Montagewerkzeug dienenden Zange 11. Auch dieses Ausführungsbeispiel der Zange 11 weist an ihrem einen Ende zwei Handgriffe 12 auf, welche wiederum über ein Hebelgetriebe 13 schwenkbar miteinander verbunden sind. An den den Handgriffen 12 in Längsrichtung 31 der Zange 11 abgewandten Ende weist die Zange 11 zwei Zangenbacken 14 auf. Die Zangenbacken 14 weisen einen Abtrennbereich 29 auf. Im Abtrennbereich 29 weist die untere Zangenbacke 14 eine Auflagefläche 16 für das zuzuschneidende Ende des Flachbandkabels 1 auf. An der gegenüberliegenden oberen Zangenbacke 14 sind in der zur Längsrichtung 31 rechtwinklig verlaufenden Querrichtung 30 der Zange 11 eine guillotinenartige Schneidklinge 17 und zwei Stanzzähne 28 angeordnet. Die Stanzzähne 28 sind in Längsrichtung 31 von einem Längsabstand 32 getrennt nebeneinander angeordnet. Der Längsabstand 32 entspricht dabei etwa der Dicke bzw. dem Querschnitt eines Leiters 2.

Liegt auf der Auflagefläche 16 das Ende eines Flachbandkabels 1 auf und werden die Zangenbacken 14 aufeinander zubewegt, schneidet die Schneidklinge 17 die Leiterenden 3, 4 des Flachbandkabels 1 auf dieselbe Länge ab. Zugleich werden die mit den Stanzzähnen 28 korrespondierenden Leiterenden 4 der beiden zwischen den jeweils äußeren und dem mittleren Leiter 2 liegenden Leiter 2 abgelängt und ausgestanzt zur Schaffung der Leiter 2 mit den verkürzten Leiterenden 4. Während des Abtrennvorgangs werden die verkürzten Leiterenden 4 nicht nur abgeschnitten, sondern auch zugleich ausgestanzt. Hierfür weist die untere Zangenbacke 14 zwei Entsorgungsöffnungen 33 auf. Während des kombinierten Stanz-Schneidvorgangs der Zange 11 an den verkürzten Leiterenden 4 wird der Leiterendenverschnitt durch die Entsorgungsöffnungen 33 ausgeworfen, indem die Stanzzähne 28 zumindest teilweise in die Entsorgungsöffnungen 33 von oben her eintauchen und den Leiterendenverschnitt nach unten stoßen.

Bei der geschilderten zweiten Ausführungsform der Zange 11 gemäß Fig. 10 und Fig. 11 wird das Feinschneiden und Austanzen der verkürzten Leiterenden 4 folglich in einem einzigen Arbeitsgang zugleich mit dem Ablängen der Leiterenden 3 realisiert, was die Bearbeitungszeit erheblich reduziert. Mit der zweiten Ausführungsform der Zange 11 ist es auch möglich, kombinierte Flachbandkabel 1 mit Energieleitungen einerseits und mit Datenleitungen andererseits zuzuschneiden. Die Datenleiter werden üblicherweise nicht beschnitten. Die Datenleiter sind dann randseitig am Flachbandkabel 1 so angeordnet, dass sie in Längsrichtung 31 über die Zangenbacken 14 der Zange 11 hinaus stehen und so von den Zangenbacken 14 nicht mit erfasst werden. Die zweite Ausführungsform eignet sich bei Verwendung einer entsprechenden Schneidklinge 17 darüber hinaus auch für die Fertigung von Leiterenden 3, 4 am Kabelende mit treppenförmigem Verlauf einerseits und mit schrägem Verlauf andererseits. Auch andere Verläufe oder Mischformen der erwähnten Verläufe sind denkbar. Auch ist es möglich, eine analog zur ersten Ausführungsform der Zange 11 ausgebildete Bahnführung 24 zu realisieren.

**Bezugszeichenliste**

| | | | |
|---|---|---|---|
| 1 | Flachbandkabel | 28 | Stanzzahn |
| 2 | Leiter | 29 | Abtrennbereich |
| 3 | Leiterende | 30 | Querrichtung |
| 4 | verkürztes Leiterende | 31 | Längsrichtung |
| 4a | zurückspringendes Leiterende | 32 | Längsabstand |
| 4b | abgeschrägtes Leiterende | 33 | Entsorgungsöffnung |
| 4c | abgeschrägtes Leiterende | | |
| 5 | Schutzkappe | | |
| 6 | Kappenbereich | | |
| 7 | Verschlusslasche | | |
| 8 | Schrauberklinge | | |
| 9 | Schraubendreher | | |
| 10 | Schrauberklingentasche | | |
| 11 | Zange | | |
| 12 | Handgriff | | |
| 13 | Hebelgetriebe | | |
| 14 | Zangenbacke | | |
| 15 | erster Schnittbereich | | |
| 16 | Auflagefläche | | |
| 17 | Schneidklinge | | |
| 18 | Feinschnittbereich | | |
| 19 | Aufnahmekammer | | |
| 20 | Schneidzahn | | |
| 21 | Ausstanzbereich | | |
| 22 | Auflageklotz | | |
| 23 | Stanzstempel | | |
| 24 | Bahnführung | | |
| 25 | Führungsschwert | | |
| 26 | Führungswange | | |
| 27 | Kodiernase | | |

## Patentansprüche

1. Flachbandkabel (1) mit mehreren nebeneinander angeordneten und parallel zueinander verlaufenden Leitern (2), wobei auf das Kabelende eine die Leiterenden (3), (4) überdeckende Schutzkappe (5) aufgesetzt ist,
**dadurch gekennzeichnet,**
**dass** die Enden zweier benachbarter Leiter (2) jeweils in unterschiedlicher Länge abgelängt sind derart, dass das Leiterende (3), (4) eines Leiters (2) gegenüber dem Ende (3), (4) seines benachbarten Leiters (2) vorspringt beziehungsweise zurückspringt.

2. Flachbandkabel (1) nach Anspruch 1
**gekennzeichnet durch**
einen mäanderförmigen Verlauf der Leiterenden (3), (4) am Kabelende.

3. Flachbandkabel (1) nach Anspruch 1
**gekennzeichnet durch**
einen treppenförmigen Verlauf der Leiterenden (3), (4) am Kabelende.

4. Flachbandkabel (1) nach Anspruch 1
**gekennzeichnet durch**
einen schrägen Verlauf der Leiterenden (3), (4) am Kabelende.

5. Flachbandkabel (1) nach einem der Ansprüche 1 bis 4 **dadurch gekennzeichnet,**
**dass** die Schutzkappe (5) eine zum Verlauf der Leiterenden (3), (4) am Kabelende komplementäre Innenkontur aufweist.

6. Flachbandkabel (1) nach einem der Ansprüche 1 bis 5
**dadurch gekennzeichnet,**
**dass** die Schutzkappe (5) am Kabelende nur durch ein Werkzeug lösbar fixiert ist.

7. Flachbandkabel (1) nach einem der Ansprüche 1 bis 5
**dadurch gekennzeichnet,**
**dass** die Schutzkappe (5) am Kabelende unlösbar fixiert ist.

8. Verfahren zum Isolieren der Leiter (2) am Kabelende eines Flachbandkabels (1) nach Anspruch 1 mit folgenden Verfahrensschritten:
a) in einem ersten Verfahrensschritt werden die Leiterenden (3), (4) des Flachbandkabels (1) geradlinig abgelängt,
b) in einem zweiten Verfahrensschritt wird das Leiterende (3), (4) jedes zweiten Leiters (2) gegenüber seinen benachbarten Leitern (2) gekürzt und
c) in einem dritten Verfahrensschritt wird die Schutzkappe (5) am Kabelende vorzugsweise unverlierbar adaptiert.

9. Verfahren nach Anspruch 8
**dadurch gekennzeichnet,**
**dass** die Leiterenden (4) jedes zweiten Leiters (2) zunächst von jeweils einem Schneidzahn (20) durchtrennt werden und dass das so zusätzlich abgetrennte Leiterstück mit einem Stanzstempel (23) aus dem Flachbandkabel (1) ausgestanzt wird.

10. Verfahren zum Isolieren der Leiter (2) am Kabelende eines Flachbandkabels (1) nach Anspruch 1 **dadurch gekennzeichnet,**
**dass** in einem ersten gemeinsamen Verfahrensschritt die Leiterenden (3), (4) des Flachbandkabels (1) geradlinig abgelängt werden und zugleich das Leiterende (4) jedes zweiten Leiters (2) gegenüber seinen benachbarten Leitern (2) gekürzt wird und
in einem zweiten Verfahrensschritt die Schutzkappe (5) am Kabelende vorzugsweise unverlierbar adaptiert wird.

11. Verfahren nach Anspruch 10
**dadurch gekennzeichnet,**
**dass** die Leiterenden (4) jedes zweiten Leiters (2) von einem Stanzzahn (28) sowohl durchtrennt als auch aus dem Flachbandkabel (1) ausgestanzt werden.

## Claims

1. Ribbon cable (1) comprising a plurality of conductors (2) which are arranged side by side and extend in parallel with one another, a protective cap (5) which covers the conductor ends (3), (4) being fitted onto the cable end, **characterised in that** the ends of two adjacent conductors (2) are each cut to different lengths such that the conductor end (3), (4) of one conductor (2) projects beyond or is set back from the end (3), (4) of its adjacent conductor (2).

2. Ribbon cable (1) according to claim 1, **characterised by** a meandering shape of the conductor ends (3), (4) at the cable end.

3. Ribbon cable (1) according to claim 1, **characterised by** a stepped shape of the conductor ends (3), (4) at the cable end.

4. Ribbon cable (1) according to claim 1, **characterised by** an oblique shape of the conductor ends (3), (4) at the cable end.

5. Ribbon cable (1) according to any of claims 1 to 4, **characterised in that** the protective cap (5) has an inner contour that is complementary to the shape of the conductor ends (3), (4) at the cable end.

6. Ribbon cable (1) according to any of claims 1 to 5, **characterised in that** the protective cap (5) is detachably fixed to the cable end only by a tool.

7. Ribbon cable (1) according to any of claims 1 to 5, **characterised in that** the protective cap (5) is permanently fixed to the cable end.

8. Method for insulating the conductors (2) at the cable end of a ribbon cable (1) according to claim 1, comprising the following method steps:
a) in a first method step, the conductor ends (3), (4) of the ribbon cable (1) are cut to length in a straight line,
b) in a second method step, the conductor end (3), (4) of every second conductor (2) is shortened with respect to its adjacent conductors (2) and
c) in a third method step, the protective cap (5) at the cable end is preferably captively adapted.

9. Method according to claim 8, **characterised in that** the conductor ends (4) of every second conductor (2) are first severed by a cutting tooth (20) in each case, and **in that** the conductor piece additionally detached in this way is punched out of the ribbon cable (1) by a punch (23).

10. Method for insulating the conductors (2) at the cable end of a ribbon cable (1) according to claim 1, **characterised in that**, in a first combined method step, the conductor ends (3), (4) of the ribbon cable (1) are cut to length in a straight line and, at the same time, the conductor end (4) of every second conductor (2) is shortened with respect to its adjacent conductors (2), and, in a second method step, the protective cap (5) at the cable end is preferably captively adapted.

11. Method according to claim 10, **characterised in that** the conductor ends (4) of every second conductor (2) are both severed and punched out of the ribbon cable (1) by a punching tooth (28).

## Revendications

1. Câble plat (1) comprenant plusieurs conducteurs (2) disposés les uns à côté des autres et s'étendant parallèlement les uns aux autres, dans lequel un capuchon de protection (5) recouvrant les extrémités de conducteurs (3, 4) est monté sur l'extrémité de câble, **caractérisé en ce que** les extrémités de deux conducteurs (2) adjacents sont coupées à des longueurs différentes de telle manière que l'extrémité (3, 4) d'un conducteur (2) fasse saillie ou soit en retrait par rapport à l'extrémité (3, 4) de son conducteur (2) adjacent.

2. Câble plat (1) selon la revendication 1, **caractérisé par** un parcours sinueux des extrémités de conducteurs (3, 4) à l'extrémité de câble.

3. Câble plat (1) selon la revendication 1, **caractérisé par** un parcours en escalier des extrémités de conducteurs (3, 4) à l'extrémité de câble.

4. Câble plat (1) selon la revendication 1, **caractérisé par** un parcours oblique des extrémités de conducteurs (3, 4) à l'extrémité de câble.

5. Câble plat (1) selon l'une des revendications 1 à 4, **caractérisé en ce que** le capuchon de protection (5) présente un contour intérieur complémentaire au parcours des extrémités de conducteurs (3, 4) à l'extrémité de câble.

6. Câble plat (1) selon l'une des revendications 1 à 5, **caractérisé en ce que** le capuchon de protection (5) est fixé de manière amovible à l'extrémité de câble uniquement au moyen d'un outil.

7. Câble plat (1) selon l'une des revendications 1 à 5, **caractérisé en ce que** le capuchon de protection (5) est fixé de manière inamovible à l'extrémité de câble.

8. Procédé d'isolation des conducteurs (2) à l'extrémité d'un câble plat (1) selon la revendication 1, comprenant les étapes de procédé suivantes :
a) dans une première étape de procédé, les extrémités de conducteurs (3, 4) du câble plat (1) sont coupées à longueur en ligne droite,
b) dans une deuxième étape, l'extrémité (3, 4) de chaque second conducteur (2) est raccourcie par rapport à ses conducteurs adjacents (2), et
c) dans une troisième étape, le capuchon de protection (5) à l'extrémité de câble est de préférence adapté de manière imperdable.

9. Procédé selon la revendication 8, **caractérisé en ce que** les extrémités (4) de chaque second conducteur (2) sont d'abord coupées chacune par une dent de coupe (20), et **en ce que** l'élément conducteur ainsi coupé est en outre poinçonné dans le câble plat (1) à l'aide d'un poinçon (23).

10. Procédé d'isolation des conducteurs (2) à l'extrémité d'un câble plat (1) selon la revendication 1, **caractérisé en ce que**, dans une première étape de procédé commune, les extrémités de conducteurs (3, 4) du câble plat (1) sont coupées à longueur en ligne droite, et en même temps l'extrémité (4) de chaque second conducteur (2) est raccourcie par rapport à ses conducteurs (2) adjacents, et dans une deuxième étape, le capuchon de protection (5) à l'extrémité de câble est de préférence adapté de manière imperdable.

11. Procédé selon la revendication 10, **caractérisé en ce que** les extrémités (4) de chaque second conducteur (2) sont toutes deux coupées par une dent de poinçonnage (28) et poinçonnées dans le câble plat (1).
